# EUROPÄISCHE PATENTSCHRIFT

(11) **EP 0 712 757 B1**
(45) Veröffentlichungstag und Bekanntmachung des Hinweises auf die Patenterteilung: **22.10.1997**
(21) Anmeldenummer: 95112047.6
(22) Anmeldetag: 01.08.1995
(51) Int. Cl.: B60R 5/04

(54) **Laderaumabdeckung für ein Kraftfahrzeug**
Cargo area cover for an automotive vehicle
Ecran pour compartiment à bagages de véhicule automobile

(30) Priorität: 19.11.1994 DE 4441260
(43) Veröffentlichungstag der Anmeldung: 22.05.1996
(73) Patentinhaber: Baumeister & Ostler GmbH & Co., 73773 Aichwald (DE)
(72) Erfinder: Ament, Eduard, D-73773 Aichwald (DE); Seel, Holger, D-71134 Aidlingen (DE)
(74) Vertreter: Wilhelm & Dauster Patentanwälte European Patent Attorneys

(56) Entgegenhaltungen:
- US-A- 4 168 094
- US-A- 5 224 748

## Beschreibung

Die Erfindung betrifft eine Laderaumabdeckung für ein Kraftfahrzeug, mit einer sich zwischen zwei becherartigen Seitenteilen erstreckenden Lagerwelle für ein auf- und abrollbares Flächengebilde, insbesondere eine Abdeckplane, wobei wenigstens eines der beiden Seitenteile federbelastet koaxial zu einer Lagerachse der Lagerwelle zwischen zwei Positionsanschlägen beweglich angeordnet ist, die eine die fahrzeugfesten Halterungen freigebende Freigabeposition einerseits und eine in den fahrzeugfesten Halterungen fixierbare Rastposition andererseits definieren.

Es ist eine Laderaumabdeckung für einen Personenkraftwagen bekannt (DE 29 41 711 A), bei der eine Abdeckplane auf einer Welle aufgerollt ist, die zwischen zwei becherartigen Seitenteilen gelagert ist. Die beiden Seitenteile sind gegen eine axiale Federbelastung teleskopartig axial nach innen drückbar, wodurch sich die Breite der Laderaumabdeckung verringert. Diese axiale Beweglichkeit der Seitenteile dient dazu, die Laderaumabdeckung in fahrzeugfesten Halterungen zu befestigen oder aus diesen zu entfernen. Zum Einsetzen der Laderaumabdeckung in die fahrzeugfesten Halterungen, insbesondere im Bereich des Laderaumes des Personenkraftwagens, wird die Laderaumabdeckung mit beiden Händen im Bereich der beiden Seitenteile ergriffen. Anschließend werden die beiden Seitenteile durch manuellen Kraftaufwand jeweils gegen eine Federkraft axial nach innen gedrückt, d.h. die von Hand aufzubringenden Kräfte sind einander entgegengerichtet. Dadurch verringert sich die Breite der Laderaumabdeckung, wodurch die Seitenteile mit entsprechenden Raststellen in korrespondierende Raststellen der fahrzeugfesten Halterungen im Bereich der Seitenwände des Laderaumes eingeführt werden können. Sobald die Laderaumabdeckung derart positioniert ist, daß die jeweils korrespondierenden Raststellen miteinander fluchten, wird die von Hand aufgebrachte axiale Kraft auf die Seitenteile weggenommen, wodurch die innerhalb der Laderaumabdeckung befindliche Feder die Seitenteile nach außen drückt. Dadurch verklemmt die Laderaumabdeckung sich zwischen den Seitenwänden des Gepäckraumes und wird zusätzlich formschlüssig durch die korrespondierenden Raststellen in dieser Position gehalten. Um die Laderaumabdeckung aus dem Gepäckraum zu entfernen, werden die Seitenteile erneut von Hand zusammengedrückt, wodurch die Laderaumabdeckung aus den fahrzeugfesten Halterungen herausgenommen werden kann.

Aufgabe der Erfindung ist es, eine Laderaumabdeckung der eingangs genannten Art zu schaffen, die eine vereinfachte Handhabung bei der Montage und Demontage der Laderaumabdeckung ermöglicht.

Diese Aufgabe wird dadurch gelöst, daß wenigstens einem der beiden Seitenteile eine manuell lösbare Sperre zum Arretieren des Seitenteiles an dem die Freigabeposition definierenden Positionsanschlag zugeordnet ist. Durch die Arretierung des wenigstens einen Seitenteiles und damit auch der Laderaumabdeckung in der Freigabeposition muß von Hand keine axiale Kraft aufgebracht werden, um die Laderaumabdeckung beim Ausrichten zu den fahrzeugfesten Halterungen in ihrer Freigabeposition zu halten. Die Handhabung der Laderaumabdeckung ist dadurch wesentlich vereinfacht. Die Laderaumabdeckung muß lediglich in ihre Freigabeposition gebracht werden, in der die Sperre wirksam wird. Anschließend kann die Laderaumabdeckung exakt auf die Höhe der fahrzeugfesten Halterungen positioniert werden. Durch ein anschließendes Lösen der Sperre von Hand werden die Seitenteile selbsttätig insbesondere durch axial wirkende Druckfederkräfte in die fahrzeugfesten Halterungen gedrückt. Die Demontage der Laderaumabdeckung erfolgt in einfacher Weise durch ein Gegeneinanderdrücken der beiden Seitenteile, wodurch das wenigstens eine Seitenteil beim Erreichen der Freigabeposition mittels der Sperre arretiert wird. In dieser Position, in der die Laderaumabdeckung eine zur Rastposition verringerte Breite aufweist, kann sie in einfacher Weise ohne Kraftaufwand aus dem Gepäckraum herausgenommen werden. Als Sperren sind sowohl kraft- als auch formschlüssig wirksame Arretierungen vorgesehen. Erfindungsgemäß ist es sowohl möglich, daß lediglich eines der beiden Seitenteile axial nach innen beweglich und in dieser Position blockierbar ist, als auch, daß beide Seitenteile mit jeweils einer eigenen Sperre versehen sind. Als Flächengebilde dienen erfindungsgemäß Abdeckplanen, Abdeckrollos oder auch Gepäcknetze. Ist zur Abdeckung ein Gepäcknetz vorgesehen, ist es auch möglich, daß die Laderaumabdeckung nicht - wie in den meisten Fällen - zur horizontalen Abdeckung des Laderaums dient, sondern vertikal zum Fahrzeughimmel des Fahrzeugdaches nach oben gezogen wird, um den Laderaum zum Fondraum des Kraftfahrzeugs hin zu begrenzen.

In Ausgestaltung der Erfindung wird als Sperre eine quer zur Lagerachse bewegliche und das Seitenteil formschlüssig arretierende Rasteinrichtung vorgesehen. Dies ist eine besonders platzsparende Ausgestaltung, da die Ver- und Entriegelungsbewegung quer zur Lagerachse verläuft und somit kein Bauraum in Axialrichtung benötigt wird.

In weiterer Ausgestaltung der Erfindung ist die Lagerwelle für eine selbstzentrierende Ausrichtung relativ zu den beiden Seitenteilen axial schwimmend gelagert. Dadurch ist das Flächengebilde immer mittig zum Laderaum ausgerichtet, auch wenn lediglich eines der beiden Seitenteile mit einer Sperre versehen ist.

In weiterer Ausgestaltung der Erfindung ist das eine Seitenteil starr mit einem die als Hohlwelle ausgebildete Lagerwelle koaxial durchsetzenden Stabelement verbunden, das an seinem freien Ende im Bereich des gegenüberliegenden Seitenteiles eine Raststelle aufweist, mit der ein in dem Seitenteil quer zur Lagerachse verschiebbar gelagerter Rastschieber formschlüssig in Wirkverbindung bringbar ist. Durch diese Form der Rasteinrichtung wird nahezu kein zusätzlicher axialer Bauraum benötigt, so daß die Laderaumabdeckung ein relativ breit gehaltenes Flächengebilde aufnehmen kann, das wiederum den Laderaum nahezu vollständig abdeckt. Außerdem stellt diese Ausgestaltung eine einfach herstellbare Sperre dar.

In weiterer Ausgestaltung der Erfindung ist dem wenigstens einen Seitenteil als Sperre eine das Seitenteil axial relativ zur Lagerwelle blockierende Rasteinrichtung zugeordnet, die mittels eines manuell bedienbaren Betätigungsknopfes entriegelbar ist.

In weiterer Ausgestaltung der Erfindung weist die Rasteinrichtung ein durch eine Federanordnung belastetes Rastelement auf, das in der Freigabeposition der Laderaumabdeckung selbsttätig durch die Druckkraft der Federanordnung in eine das Seitenteil blockierende Position drückbar ist. Dadurch wird bei Erreichen der Freigabeposition eine automatische Arretierung des Seltenteils erzielt.

In weiterer Ausgestaltung der Erfindung ist das Rastelement Teil des Betätigungsknopfes. Dadurch kommt dem Betätigungsknopf eine Doppelfunktion zu. Er dient sowohl zum Entriegeln als auch zum Verriegeln des Seitenteiles.

In weiterer Ausgestaltung der Erfindung ist als Sperre eine entsprechend dem Kugelschreiberprinzip wirksame Rastanordnung für das Seitenteil vorgesehen. Auch diese erfindungsgemäße Ausgestaltung gestattet eine Arretierung des Seitenteiles in einer Freigabeposition, in der die Laderaumabdeckung eine geringere Breite als der Abstand der gegenüberliegenden fahrzeugfesten Halterungen zueinander aufweist, so daß keine größeren axialen Kräfte von Hand aufgewandt werden müssen, um die Laderaumabdeckung in die korrespondierenden fahrzeugfesten Halterungen einzuführen.

Weitere Vorteile und Merkmale der Erfindung ergeben sich aus den Unteransprüchen sowie aus der nachfolgenden Beschreibung von bevorzugten Ausführungsbeispielen, die anhand der Zeichnungen dargestellt sind.
- Fig. 1: zeigt in perspektivischer Darstellung eine Ausführungsform einer Laderaumabdeckung, bei der ohne das Vorsehen eines Kassettengehäuses das auf einer Lagerwelle aufrollbare Flächengebilde direkt von Seitenteilen flankiert wird,
- Fig. 2: in teilweise geschnittener Darstellung die Laderaumabdeckung nach Fig. 1 in ihrer Freigabeposition, in der sie eine gegenüber der Arretierposition verringerte Breite aufweist,
- Fig. 3: die Laderaumabdeckung nach den Figuren 1 und 2 in einer Zwischenposition, in der die Sperre entriegelt ist und
- Fig. 4: eine weitere Darstellung der Laderaumabdeckung nach den Figuren 1 bis 3 in einer Rastposition, in der die Laderaumabdeckung in den fahrzeugfesten Halterungen arretierbar ist,
- Figuren 5a und 5b: einen Schnitt durch die Laderaumabdeckung nach den Figuren 1 bis 4 entlang der Schnittlinie V-V in Figur 4,
- Fig. 6: in perspektivischer Darstellung eine weitere erfindungsgemäße Ausführungsform einer Laderaumabdeckung, die mit einem Kassettengehäuse versehen ist und in ihrer Freigabeposition dargestellt ist,
- Fig. 7: die Laderaumabdeckung nach Fig. 6, jedoch in ihrer Rastposition,
- Fig. 8: einen Längsschnitt durch die Laderaumabdeckung nach den Figuren 6 und 7,
- Fig. 9: die Laderaumabdeckung nach Fig. 8 in einer entsprechenden Schnittdarstellung, wobei sich die Laderaumabdeckung jedoch in ihrer Rastposition befindet,
- Fig. 10: in perspektivischer Darstellung eine weitere erfindungsgemäße Ausgestaltung einer Laderaumabdeckung, bei der das Seitenteil mittels einer entsprechend dem Kugelschreiberprinzip wirksamen Rastanordnung arretierbar ist, und
- Fig. 11: einen Längsschnitt durch die Laderaumabdeckung nach Fig. 10 im Bereich des mit der Rastanordnung versehenen Seitenteiles.

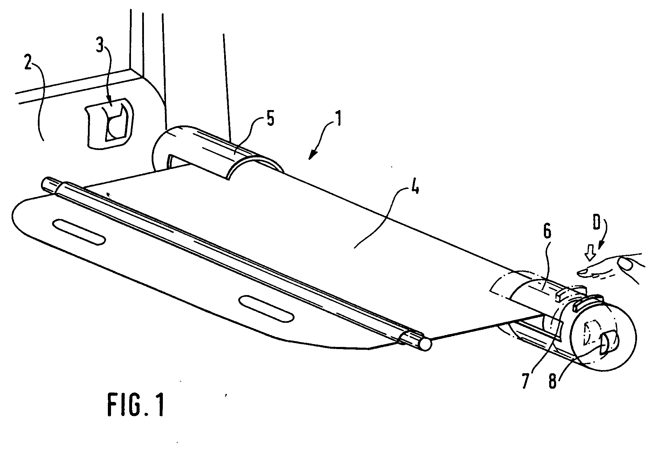

Eine Laderaumabdeckung (1) nach den Figuren 1 bis 5b dient zur Abdeckung eines Laderaumes eines Kombi-Personenkraftwagens. Die Laderaumabdeckung (1) ist an gegenüberliegenden Seitenwandungen (2) des Laderaumes im Anschluß an nicht dargestellte Rückenlehnen von Fondsitzen des Kombi-Personenkraftwagens fahrzeugfest montierbar. Dazu ist an jeder Seitenwandung (2) jeweils eine fahrzeugfeste Halterung (3) vorgesehen. Die Laderaumabdeckung (1) weist eine ein Flächengebilde darstellende Abdeckplane (4) auf, die auf einer als Lagerwelle dienenden Hohlwelle (10) um eine Lagerachse (9) auf- und abrollbar angeordnet ist. Die Lagerachse (9) stellt die Mittellängsachse der Laderaumabdeckung (1) dar. Die Hohlwelle (4) ist an ihren gegenüberliegenden Stirnenden auf jeweils einem Lagerbolzen (14 bzw. 16) zweier Seitenteile (5 und 6) drehbar gelagert, die becherartig ausgebildet sind und die gegenüberliegenden Stirnseiten der Hohlwelle (10) koaxial übergreifen. Der Boden jedes Seitenteiles (5, 6) bildet die jeweilige Stirnseite der Laderaumabdeckung (1). An der Außenseite jedes Bodens ist jeweils ein Rastnocken (8) vorgesehen, der in der Rastposition der Laderaumabdeckung (1) in die jeweilige fahrzeugfeste Halterung (3) eingreift. Jedes Seitenteil (5, 6) weist im Bereich der Abdeckplane (4) einen Längsschlitz auf, wodurch die Bewegung der Abdeckplane (4) durch die Seitenteile (5 und 6) nicht behindert wird. Im Bereich der beiden Stirnenden der Hohlwelle (10) ist jeweils eine becherähnliche Lagerbuchse (12 bzw. 15) ins Innere der Hohlwelle eingesetzt und starr mit dieser verbunden. Der Innendurchmesser der Lagerbuchsen (12, 15) ist an den jeweiligen Außendurchmesser der Lagerbolzen (14, 16) der Seitenteile (5, 6) angepaßt, so daß sich eine Gleitlagerung für die Hohlwelle (10) auf den Lagerbolzen (14, 16) der Seitenteile (5, 6) ergibt.

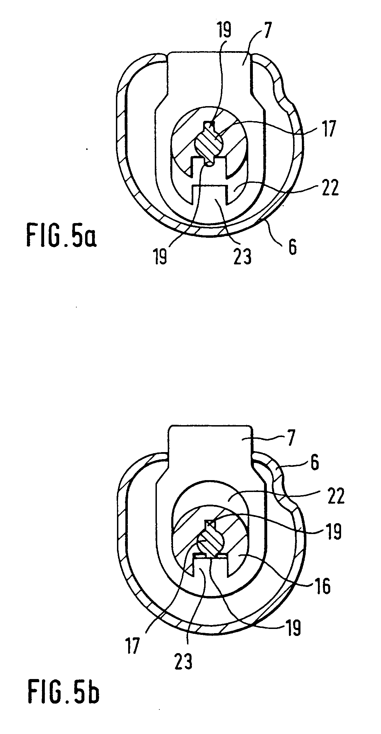

Die beiden gegenüberliegenden Seitenteile (5, 6) sind drehfest durch ein Stabelement (17) miteinander verbunden, das die Hohlwelle (10) koaxial zur Lagerachse (9) durchsetzt. Das Stabelement (17) ist mittels eines Stiftes (18) starr mit dem Seitenteil (5) verbunden, der auf Höhe des Rastnockens (8) des Seitenteiles (5) vorgesehen ist. Mit dem Seitenteil (5) ist das Stabelement (17) daher sowohl drehschlüssig als auch axial starr verbunden. Mit dem gegenüberliegenden Seitenteil (6) ist das Stabelement (17) lediglich drehschlüssig verbunden, in axialer Richtung - auf die Lagerachse (9) bezogen - sind jedoch lineare Relativbewegungen zwischen dem Seitenteil (6) und dem als Rundstab ausgebildeten Stabelement (17) möglich. Dazu ist im Bereich des freien Endes des Stabelementes (17) ein Schlüsselzapfen (19) vorgesehen, dem im Seitenteil (6), und zwar im Lagerbolzen (16) und dem einstückig angeformten Rastnocken (8) ein korrespondierendes Schlüsselhohlprofil zugeordnet ist. Das Schlüsselhohlprofil ist zur Stirnseite des Rastnockens (8) hin offen. Das Schlüsselhohlprofil weist eine kreiszylindrische Form auf, die auf zwei gegenüberliegenden Seiten, beim dargestellten Ausführungsbeispiel oben und unten, mit jeweils einer Längsnut versehen ist. Das Schlüsselhohlprofil und das Profil des Stabelementes (17) auf Höhe des Schlüsselzapfens (19) sind aus den Figuren 5a und 5b erkennbar. Durch diese Nutführung des Stabelementes (17) ist das Seitenteil (6) drehschlüssig mit dem Stabelement (17) verbunden, gleichzeitig sind jedoch axiale Relativbewegungen zwischen dem Seitenteil (6) und dem Stabelement (17) möglich.

Die Hohlwelle (10) ist durch eine Rückholfeder (11) belastet, die die Abdeckplane (4) selbsttätig in ihre aufgerollte Ruheposition zurückzieht. Die Rückholfeder (11) greift an der Lagerbuchse (12) der Hohlwelle (10) einerseits und in nicht dargestellter Weise an dem Stabelement (17) andererseits an. Die Rastnocken (8) sind so ausgebildet, daß eine Verdrehung der Seitenteile (5, 6) in den fahrzeugfesten Halterungen (3) nicht möglich ist.

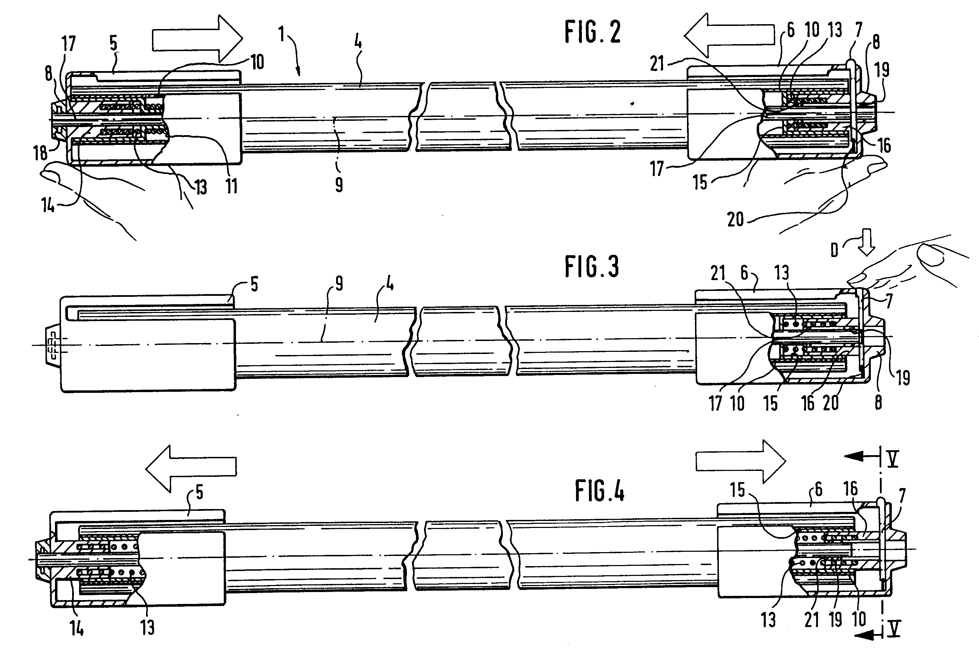

Beide Seitenteile (5 und 6) sind relativ zur Hohlwelle (10) axial beweglich, da die Lagerbolzen (14 und 16) lediglich in die Lagerbuchsen (12 bzw. 15) der Hohlwelle (10) gleit- und drehbeweglich eingeschoben sind. Beide Lagerbolzen (14, 16) stützen sich mittels jeweils einer Druckfeder 13 an dem korrespondierenden Boden der jeweiligen Lagerbuchse (12, 15) ab. Die beiden Druckfedern (13) sind identisch ausgebildet, so daß sie auch die gleiche Federkraft ausüben. Dadurch ist die Hohlwelle (10) schwimmend relativ zu den Seitenteilen (5 und 6) gelagert und richtet sich immer mittig zu diesen aus. Dies ist von Vorteil für die Position der Abdeckplane (4), da die Abdeckplane (4) aufgrund dieser schwimmenden Lagerung der Hohlwelle immer symmetrisch zur Mitte des Laderaumes ausgerichtet ist. Die Hohlwelle (10) und damit auch die Abdeckplane (4) richtet sich immer mittig aus, so daß die Tatsache, daß lediglich das Seitenteil (6) axial beweglich zum Stabelement (17) angeordnet ist, sich nicht nachteilig auswirkt. Der axiale Weg des Seitenteiles (6) relativ zu dem Stabelement (17) nach außen wird durch einen Anschlag (21) begrenzt, der in dem Schlüsselprofil des Lagerbolzens (16) angeordnet ist. In der Rastposition der Laderaumabdeckung (1) (Figur 4), in der die Laderaumabdeckung (1) ihre maximale Breite einnimmt, liegt der Schlüsselzapfen (19) an dem Anschlag (21) an und begrenzt somit eine weitere Axialbewegung des Seitenteiles (6) relativ zu dem Stabelement (17) nach außen.

Das Seitenteil (6) ist in einer Freigabeposition mittels einer nachfolgend näher beschriebenen Sperre arretierbar, wobei die Freigabeposition die Position des Seitenteiles (6) darstellt, in der der Lagerbolzen (16) des Seitenteiles (6) bis zu seinem Anschlag in die Lagerbuchse (15) der Hohlwelle (10) eingeschoben ist. Der Anschlag wird durch die maximal zusammengepreßte Schraubendruckfeder (13) gebildet. In dieser Position hintergreift den Schlüsselzapfen (19) ein Rastschieber (7), der quer zur Lagerachse (9) in das Seitenteil (6) eingeschoben ist und mittels einer nachfolgend näher beschriebenen Schlüsselöse (22, 23) das Stabelement (17) und den Lagerbolzen (16) umschließt. Der Rastschieber (7) stellt ein plattenartiges Bauteil dar, bei dem die Schlüsselöse (22, 23) durch ein Langloch gebildet wird, dessen Breite dem Durchmesser des Lagerbolzens (16) entspricht. An seiner Oberseite weist der Rastschieber (7) einen Betätigungssteg auf, der im verrasteten Zustand des Rastschiebers (7) nach oben aus dem Seitenteil (6) herausragt. Die von dem Steg aus nach innen ragenden Seiten sind parallel zueinander ausgebildet. Der Steg ist in seiner Breite auf die Breite des Schlitzes in dem Seitenteil (6) abgestimmt, so daß die Seiten des Steges in Verbindung mit den Schlitzrändern Linearführungen für den Rastschieber (7) bilden. Weitere Linearführungsbereiche ergeben sich durch die parallelen Wandungen des Langloches und durch eine stabile Rastlasche (23), die in die Schlüsselöse (22) hineinragt und der im Lagerbolzen (16) ein korrespondierender Schlitz zugeordnet ist. Durch diese Gestaltung der Schlüsselöse (22) und der stabilen Rastlasche (23) ist es möglich, den Schlüsselzapfen (19) zu hintergreifen und so eine Relativbewegung zwischen dem Seitenteil (6) und dem Stabelement (17) zu unterbinden. In Figur 5a ist die den Schlüsselzapfen (19) freigebende Stellung des Rastschiebers (7), in Figur 5b hingegen die den Schlüsselzapfen (19) hintergreifende Stellung dargestellt. An seiner Unterseite weist der Rastschieber (7) eine Druckfeder (20) auf, die ihn selbsttätig immer wieder in die Betätigungsposition (Figur 2) zurückschiebt. Die Stellung, in der der Rastschieber (7) den Schlüsselzapfen (19) hintergreift, stellt die Freigabeposition des Seitenteiles (6) und damit der Laderaumabdeckung (1) dar, in der die beiden Seitenteile (6) bis zu dem Anschlag axial auf die Hohlwelle (10) aufgeschoben sind. In dieser Position kann die Laderaumabdeckung (1) - wie durch die schematisch dargestellten Hände gezeigt ist - ohne größeren Kraftaufwand in den Laderaum eingeführt und auf Höhe der fahrzeugfesten Halterung (3) positioniert werden. Dadurch ist es möglich, daß der Rastnocken (8) des linken Seitenteiles (5) bereits in die korrespondierende fahrzeugfeste Halterung eingeschoben wird. Anschließend wird in einfacher Weise der Betätigungssteg und damit der Rastschieber (7) in Pfeilrichtung (D) nach unten gedrückt, wodurch der Schlüsselzapfen (19) freigegeben wird und das Seitenteil (6) durch die Druckkraft der Druckfeder (13) nach außen gedrückt wird. Dabei wird der Rastnocken (8) in die korrespondierende fahrzeugfeste Halterung (3) eingeschoben. Sobald die Belastung der Finger einer Hand auf den Rastschieber (7) aufgehoben wird, drückt die Rücksetzfeder (20) den Rastschieber (7) automatisch wieder in seine Betätigungsposition gemäß Figur 2 zurück. Durch die schwimmende Lagerung hat sich die Hohlwelle (10) und damit auch die Abdeckplane (4) selbsttätig mittig zum Laderaum ausgerichtet.

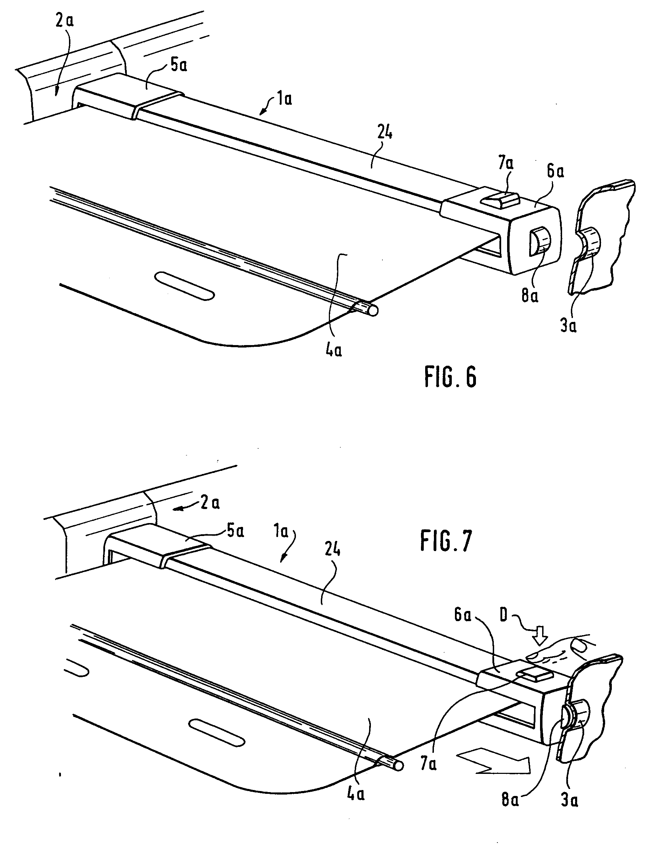

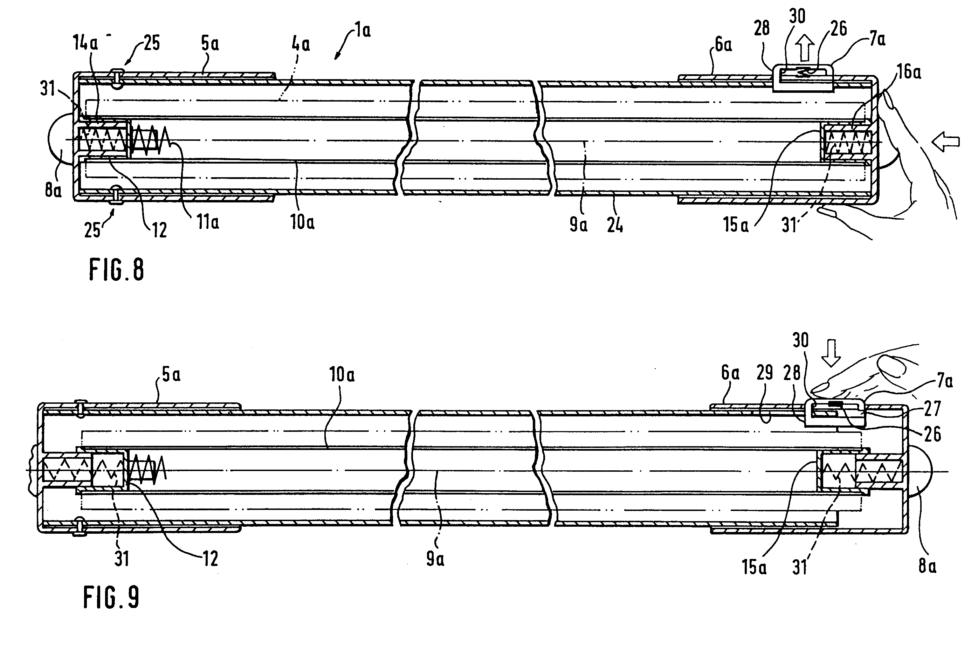

Eine Laderaumabdeckung (1a) nach den Figuren (6 bis 9) dient ebenfalls zur Abdeckung eines Laderaumes eines Kombi-Personenkraftwagens. Auch diese Laderaumabdeckung (1a) wird an gegenüberliegenden Seitenwandungen (2a) des Laderaumes im Anschluß an nicht dargestellte Rückenlehnen einer Fondsitzbank des Personenkraftwagens fahrzeugfest montiert. Dazu sind in den Seitenwandungen (2a) fahrzeugfeste Halterungen (3a) vorgesehen. Die Laderaumabdeckung (1a) weist im Gegensatz zur Laderaumabdeckung (1) nach den Figuren 1 bis 5b ein kassettenartiges Gehäuse (24) auf, das auf seiner Vorderseite mit einem Schlitz für den Austritt der Abdeckplane (4a) versehen ist. Das kassettenartige Gehäuse (24) weist ein viereckiges Hohlprofil auf. Auf dem kassettenartigen Gehäuse (24) sind im Bereich seiner gegenüberliegenden Stirnseiten die beiden Seitenteile (5a, 6a) aufgeschoben, die im wesentlichen den Seitenteilen (5 und 6) gemäß den Figuren 1 bis 4 entsprechen. Die Seitenteile (5a und 6a) sind jedoch entsprechend der Gestaltung des Gehäuses (24) mit einer vierkantigen Becherform ausgestattet. Auch bei diesen Seitenteilen (5a und 6a) bilden die Böden der Seitenteile (5a und 6a) gleichzeitig die gegenüberliegenden Stirnseiten der Laderaumabdeckung (1a). An den Außenseiten der Böden ist jeweils ein Rastnocken (8a) vorgesehen, der in der korrespondierenden fahrzeugfesten Halterung (3a) fixierbar ist. Auch die Hohlwelle (10a), die die Abdeckplane (4a) trägt, ist entsprechend dem zuvor beschriebenen Ausführungsbeispiel mit Hife von Lagerwalzen (14a) und Lagerbuchsen (12a bzw. 16a und 15a) sowie gleich großen Druckfedern (31) relativ zu den beiden Seitenteilen (5a und 6a) schwimmend gelagert. Wie aus den Figuren 8 und 9 erkennbar ist, ist bei der Laderaumabdeckung (1a) gemäß den Figuren 6 bis 9 jedoch das linke Seitenteil (5a) mit Hilfe von Vernietungen (25) starr auf dem Kassettengehäuse (24) befestigt.

Das rechte Seitenteil (6a) ist axial zur Lagerachse (9a) auf dem Kassettengehäuse (24) zwischen einer Freigabeposition und einer Rastposition verschiebbar gelagert. Die beiden Positionsanschläge, die die Freigabeposition und die Rastposition des Seitenteiles (6a) relativ zu dem Kassettengehäuse (24) definieren, werden durch eine spezielle Ausgestaltung eines Rastknopfes (7a) gebildet, der gleichzeitig als Sperre zur Arretierung des Seitenteiles (6a) in seiner Freigabeposition dient. Der Rastknopf (7a) ist Teil einer Rasteinrichtung, die die Sperre für das Seitenteil (6a) darstellt. Die Funktion der Arretierung des Seitenteiles (6a) in seiner Freigabeposition entspricht der zuvor beschriebenen Funktion des Ausführungsbeispiels gemäß den Figuren 1 bis 5b, so daß hierauf nicht mehr näher eingegangen werden muß. Mittels der Rasteinrichtung wird das Seitenteil (6a) in seiner Freigabeposition und damit auch in der Freigabeposition der Laderaumabdeckung (1a) formschlüssig fixiert. Bei nicht dargestellten Ausführungen der Erfindung erfolgt eine kraftschlüssige Blockierung des Seitenteiles durch Verklemmen oder ähnliches.

Der Rastknopf (7a) ist in zwei miteinander fluchtende und identisch dimensionierte Durchbrüche an der Oberseite der Laderaumabdeckung (1a) eingesetzt. Ein unterer Durchbruch (29) ist in dem Kassettengehäuse (24), ein oberer Durchbruch in dem Seitenteil (6a) vorgesehen. In der Freigabeposition der Laderaumabdeckung (1a) fluchten die beiden Durchbrüche miteinander. Der Rastknopf (7a) stellt gleichzeitig einen Betätigungsknopf dar, der in Richtung der Pfeile - gezeigt in den Figuren 8 und 9 - beweglich ist. Der Rastknopf (7a) ist auf einem Steg gehalten, der nicht näher bezeichnet ist. Der Steg übergreift den Durchbruch des Seitenteiles (6a) und ist starr mit dem Seitenteil (6a) verbunden. Zwischen dem Steg und dem Rastknopf (7a) ist eine Druckfeder (26) vorgesehen, die quer zur Lagerachse (9a) komprimierbar ist. Der Rastknopf (7a) ist gegen die Federkraft dieser Druckfeder (26) radial nach innen drückbar und wird somit durch die Federkraft der Druckfeder (26) ohne eine äußere Belastung radial nach außen gedrückt. Sowohl in dem Seitenbereich des hülsenartigen Kassettengehäuses (24) als auch in dem Mantel des becherartigen Seitenteiles (6a) ist auf einer Oberseite der Laderaumabdeckung (1a) jeweils eine an die Kontur des Rastknopfes (7a) angepaßte viereckige Aussparung (29) vorgesehen. Die Abmessungen der Aussparungen entsprechen einander. Da sich die Aussparungen in der Freigabeposition der Laderaumabdeckung (1a) fluchtend überdecken, wird der Rastknopf (7a) durch die Federkraft der Druckfeder (26) automatisch durch die beiden Aussparungen (29) hindurch in Pfeilrichtung radial nach oben gedrückt. Der Rastknopf weist einen vertikalen Stegfortsatz (28) auf, der in der nach außen gedrückten Position des Rastknopfes (7a) das Seitenteil (6a) auf dem Kassettengehäuse (24) blockiert. Die Außenseite des Stegfortsatzes (28) stellt daher einen Positionsanschlag für die Freigabeposition des Seitenteiles (6a) dar. Die Höhe des Rastknopfes (7a) ist so bemessen, daß er in dieser Position durch beide Aussparungen hindurch aus dem Seitenteil (6a) nach oben herausragt. Der Rastknopf (7a) ist außerdem mit einem horizontalen Längsschlitz (27) versehen, der zur Stirnseite des Seitenteiles (6a) hin offen ist. Der Längsschlitz (27) verläuft parallel zu den Umfangswandungen des Seitenteiles (6a) und des Kassettengehäuses (24) und ist in Umfangsrichtung der Laderaumabdeckung (1a) zu beiden Seiten hin offen. Der Rastknopf (7a) weist daher entsprechend dem dargestellten Längsschnitt ein U-ähnliches oder C-ähnliches Profil auf. Dabei ist die Höhe des Längsschlitzes (27) derart an die Dicke der Wandung des Kassettengehäuses (24) angepaßt, daß der Rastknopf (7a) sich axial nach außen über die Kassettenhülse schieben kann (Figur 9). Die Tiefe des Längsschlitzes (27) in axialer Richtung entspricht zudem der Länge des maximalen Verschiebeweges des Seitenteiles (6a) relativ zum Kassettengehäuse (24). Die Innenseite (30) des Stegfortsatzes (28) stellt somit den Positionsanschlag für die Rastposition der Laderaumabdeckung (1a) dar (Fig. 9).

Sobald der Rastknopf (7a) durch eine Betätigung von Hand in Pfeilrichtung (Fig. 9) so weit nach unten gedrückt ist, daß der Längsschlitz (27) mit der Wandung des Kassettengehäuses (24) axial fluchtet, wird das Seitenteil (6a) durch die Federkräfte der Druckfedern (31) automatisch axial nach außen verschoben. Um die Laderaumabdeckung (1a) wieder in die durch den Rastknopf (7a) verrastete Freigabeposition mit geringerer Breite zu bringen, wird in einfacher Weise von Hand das Seitenteil (6a, Fig. 8) in Pfeilrichtung axial nach innen gedrückt, bis die beiden Aussparungen im Seitenteil (6a) bzw. im Kassettengehäuse (24) wieder miteinander fluchten. Durch die Federkraft der Druckfeder (26) wird der Rastknopf (7a) in dieser Position selbsttätig in Pfeilrichtung radial nach außen gedrückt, wodurch das Seitenteil (6a) in dieser Position wieder relativ zum Kassettengehäuse (24) arretiert ist.

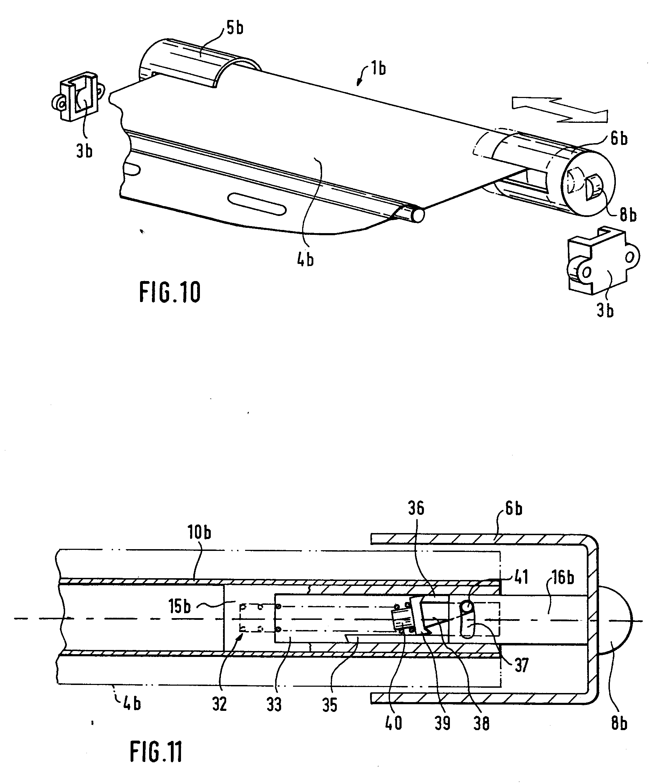

Eine weitere Laderaumabdeckung (1b) nach den Figuren 10 und 11 weist ebenfalls eine Hohlwelle (10b) auf, die auf ihren gegenüberliegenden Stirnseiten von jeweils einem becherartigen Seitenteil (5b, 6b) übergriffen wird. Die Hohlwelle (10b) ist bei diesem Ausführungsbeispiel nicht schwimmend gelagert, so daß das linke Seitenteil (5b) axial fixiert mit der Hohlwelle (10b) verbunden ist. Das rechte Teil (6b) ist entsprechend der Darstellung nach Figur 10 relativ zur Hohlwelle (10b) zwischen einer Freigabeposition und einer Rastposition axial verschiebbar, wobei das Seitenteil (6b) entsprechend den zuvor beschriebenen Ausführungsbeispielen zusätzlich in seiner Freigabeposition arretierbar ist. Als Sperre zur Arretierung des Seitenteiles (6a) in der Freigabeposition ist eine gemäß dem Kugelschreiberprinzip arbeitende Rasteinrichtung vorgesehen. Dazu ist in dem Lagerbolzen (16b) des Seitenteiles (6b), der in einer Lagerbuchse (15b) der Hohlwelle (10b) geführt ist, noch eine bogenartige Kulissenführung (37) vorgesehen, in der ein Zapfen (41) in eine zur Lagerachse lotrechten Achse in einem Hohlraum (33) der Lagerbuchse (15b) kippbaren Rastkopfes (38) gehalten ist. Der Rastkopf (38) weist einen Rastring (39) auf, der an seinem Außenumfang mit einer axial in Richtung des Lagerbolzens (16b) ragenden Rastnase versehen ist. Axial nach innen schließt an den Rastring (39) ein zylindrischer Aufnahmebereich (40) zur Halterung einer als Druckfeder ausgebildeten Schraubenfeder (33) an, deren anderes Ende in einer Vertiefung an einem Boden der Lagerbuchse (15b) abgestützt ist. Der Lagerbolzen (16b) weist auf zwei gegenüberliegenden Seiten zwei axial in den Hohlraum der Lagerbuchse (15b) hineinragende Raststege (35 und 36) auf, die jeweils an der Innenwandung der Lagerbuchse (15b) gleitbeweglich anliegen. Der Raststeg (36) weist eine gegenüber dem Raststeg (35) wesentlich verringerte axiale Länge auf. Die Längendifferenz der beiden Raststege (35 und 36) zueinander definiert den maximalen Verschiebeweg des Seitenteiles (6b) zwischen seiner Freigabeposition und seiner Rastposition. Die Raststege (35 und 36) definieren dadurch auch die Endanschläge für die beiden Endpositionen. Entsprechend dem Kugelschreiberrastprinzip kommt der Rastring (39) entweder mit dem kurzen Raststeg (36) oder mit dem langen Raststeg (35) in Eingriff, wodurch das Seitenteil (6b) in zwei unterschiedlichen Positionen relativ zur Hohlwelle (10b) arretierbar ist. Die dargestellte Position stellt die Freigabeposition der Laderaumabdeckung (1b) dar. Wie aus Figur 10 erkennbar ist, sind die karosseriefesten Halterungen (3b) als mit den Seitenwandungen des Laderaumes starr verbindbare Halteblöcke ausgebildet.

## Patentansprüche

1. Laderaumabdeckung (1,1a,1b) für ein Kraftfahrzeug, mit einer sich zwischen zwei jeweils in einer Fahrzeugfesten Halterung (3,3a,3b) fixierbaren becherartigen Seitenteilen (5,6,5a,6a,5b,6b) erstreckenden Lagerwelle (10,10a,10b) für ein auf- und abrollbares Flächengebilde, insbesondere eine Abdeckplane (4,4a,4b), wobei wenigstens eines der beiden Seitenteile federbelastet koaxial zu einer Lagerachse (9,9a) der Lagerwelle zwischen zwei Positionsanschlägen beweglich angeordnet ist, die eine die fahrzeugfesten Halterungen freigebende Freigabeposition einerseits und eine in den fahrzeugfesten Halterungen fixierbare Rastposition andererseits definieren, dadurch gekennzeichnet, daß wenigstens einem der beiden Seitenteile (6, 6a, 6b) eine manuell lösbare Sperre (7; 7a; 35, 36, 39) zum Arretieren des Seitenteiles (6, 6a, 6b) an dem die Freigabeposition definierenden Positionsanschlag zugeordnet ist.

2. Laderaumabdeckung nach Anspruch 1, dadurch gekennzeichnet, daß als Sperre eine quer zur Lagerachse (9, 9a) bewegliche und das Seitenteil (6, 6a) formschlüssig arretierende Rasteinrichtung (7, 7a) vorgesehen ist.

3. Laderaumabdeckung nach Anspruch 2, dadurch gekennzeichnet, daß die Lagerwelle (10, 10a) für eine selbstzentrierende Ausrichtung relativ zu den beiden Seitenteilen (5, 6; 5a, 6a) axial schwimmend gelagert ist.

4. Laderaumabdeckung nach Anspruch 3, dadurch gekennzeichnet, daß das eine Seitenteil (5) starr mit einem die als Hohlwelle ausgebildete Lagerwelle (10) koaxial durchsetzenden Stabelement (17) verbunden ist, das an seinem freien Ende im Bereich des gegenüberliegenden Seitenteiles (6) eine Raststelle (19) aufweist, mit der ein in dem Seitenteil (6) quer zur Lagerachse (9) verschiebbar gelagerter Rastschieber (7) formschlüssig in Wirkverbindung bringbar ist.

5. Laderaumabdeckung nach Anspruch 4, dadurch gekennzeichnet, daß der Rastschieber für eine manuelle Betätigung radial aus dem Seitenteil (6) nach außen herausragt und mit einer ihn in seine Rastposition rücksetzenden Rücksetzfeder (20) versehen ist.

6. Laderaumabdeckung nach Anspruch 5, dadurch gekennzeichnet, daß das Stabelement (17) im Bereich seiner Raststelle mit einem wenigstens zu einer Seite radial außen abragenden Rastzapfen (19) versehen ist, und daß der Rastschieber (7) mit einem korrespondierenden Schlüsselprofil (22, 23) versehen ist.

7. Laderaumabdeckung nach einem der Ansprüche 1 bis 3, dadurch gekennzeichnet, daß dem wenigstens einen Seitenteil (6a) als Sperre eine das Seitenteil (6a) axial relativ zur Lagerwelle (10a) blockierende Rasteinrichtung (7a) zugeordnet ist, die mittels eines manuell bedienbaren Betätigungsknopfes (7a) entriegelbar ist.

8. Laderaumabdeckung nach Anspruch 7, dadurch gekennzeichnet, daß die Rasteinrichtung (7a) ein durch eine Federanordnung (26) belastetes Rastelement (7a) aufweist, das in der Freigabeposition der Laderaumabdeckung (1a) selbsttätig durch die Druckkraft der Federanordnung (26) in eine das Seitenteil (6a) blockierende Position drückbar ist.

9. Laderaumabdeckung nach Anspruch 8, dadurch gekennzeichnet, daß das Rastelement (7a) Teil des Betätigungsknopfes ist.

10. Laderaumabdeckung nach Anspruch 1, dadurch gekennzeichnet, daß als Sperre eine entsprechend dem Kugelschreiberprinzip wirksame Rastanordnung für das Seitenteil (6b) vorgesehen ist.

## Claims

1. A load space blind (1, 1a, 1b) for a motor vehicle, with, extending between two cup-like side parts (5, 6, 5a, 6a, 5b, 6b) adapted to be respectively fixed in supports (3, 3a, 3b) rigid with the vehicle, a mounting shaft (10, 10a, 10b) for a flat structure adapted to be rolled up and unrolled, particularly a covering blind (4, 4a, 4b) whereby at least one of the two side parts is spring loaded and adapted for movement between two positioning abutments and coaxially with a bearing axis (9, 9a) and which on the one hand define a release position in which the supports rigid with the vehicle are released and, on the other, a catch position which can be fixed in the supports rigid with the vehicle, characterised in that associated with at least one of the two side parts (6, 6a, 6b) there is a manually releasable lock (7, 7a; 35, 36, 39) for locking the side part (6, 6a, 6b) at the positioning abutment which defines the release position.

2. A load space blind according to claim 1, characterised in that the lock provided is a catch device (7, 7a) which form-lockingly arrests the side part (6, 6a) and is movable crosswise to the bearing axis (9, 9a).

3. A load space blind according to claim 2, characterised in that the bearing shaft (10, 10a) is, for a self-centring alignment, mounted to be axially floating in relation to the two side parts (5, 6, 5a, 6a).

4. A load space blind according to claim 3, characterised in that one side part (5) is rigidly connected to a bar element (17) extending coaxially through the mounting shaft (10) which is constructed as a hollow shaft and which has at its free end, in the region of the oppositely disposed side part (6) a catch location (19) with which it is possible to bring into form-locking and operative connection a catch slide (7) mounted for displacement in the side part (6) and crosswise to the bearing axis (9).

5. A load space blind according to claim 4, characterised in that for manual actuation the catch slide projects radially outwards from the side part (6) and is provided with a restoring spring (20) which resets it in its catch position.

6. A load space blind according to claim 5, characterised in that the bar element (17) is in the region of its catch location provided with a catch stud (19) projecting radially outwardly on at least one side and in that the catch slide (7) is provided with a matching key profile (22, 23|).

7. A load space blind according to one of claims 1 to 3, characterised in that associated with the at least one side part (6a) as a lock there is a catch device (7a) which attests the side part (6a) axially in relation to the mounting shalt (10a), said catch device (7a) being adapted to be unlocked by a manually operable actuating knob (7a).

8. A load space blind according to claim 7, characterised in that the catch device (7a) comprises, loaded by a spring arrangement (26), a catch element (7a) which in the release position of the load space blind (1a) can automatically be pressed by the thrusting force of the spring arrangement (26) into a position which locks the side part (6a).

9. A load space blind according to claim 8, characterised in that the catch element (7a) is part of the actuating knob.

10. A load space blind according to claim 1, characterised in that a catch arrangement which acts on the ball point pen principle is provided as a lock for the side part (6b).

## Revendications

1. Elément de recouvrement (1,1a,1b) pour compartiment à bagages pour un véhicule automobile, comportant un arbre de support (10,10a,10b), qui s'étend entre deux parties latérales (5,6,5a,6a,5b,6b), en forme de pots, qui peuvent être fixées chacune dans un support (3,3a,3b) solidaire du véhicule, pour une structure planiforme pouvant être enroulée et déroulée, notamment un bâche de recouvrement (4,4a,4b), et dans laquelle au moins l'une des deux parties latérales est disposée, en étant chargée par un ressort de manière à être déplaçable coaxialement à un axe (9,9a) de l'arbre de support entre deux butées de position, qui définissent d'une part une position de libération, qui libère les supports solidaires du véhicule, et d'autre part une position d'encliquetage, qui peut être fixée dans les supports solidaires du véhicule, caractérisé en ce qu'à au moins l'une des deux parties latérales (6,6a,6b) est associé un dispositif de blocage (7;7a;35,36,39) qui peut être bloqué manuellement et qui sert à bloquer la partie latérale (6,6a,6b) contre la butée de position, qui définit la position de libération.

2. Elément de recouvrement pour compartiment à bagages selon la revendication 1, caractérisé en ce qu'il est prévu comme dispositif de blocage un dispositif d'encliquetage (7,7a) qui est mobile transversalement par rapport à l'axe de support (9,9a) et bloque la partie latérale (6,6a) selon une liaison par formes complémentaires.

3. Elément de recouvrement pour compartiment à bagages selon la revendication 2, caractérisé en ce que l'arbre de support (10,10a) est monté de manière à être flottant axialement pour un alignement avec centrage automatique par rapport aux deux parties latérales (5,6;5a,6a).

4. Elément de recouvrement pour compartiment à bagages selon la revendication 3, caractérisé en ce qu'une partie latérale (5) est reliée rigidement à un élément en forme de tige (17), qui traverse coaxialement l'arbre de support (10) agencé sous la forme d'un arbre creux et qui comporte, au niveau de son extrémité libre et dans la zone de la partie latérale opposée (6), une partie d'encliquetage (19), avec laquelle peut être amené à coopérer, selon une liaison par formes complémentaires, un poussoir d'encliquetage (7) qui est monté dans la partie latérale (6) de manière à être déplaçable transversalement par rapport à l'axe (9).

5. Elément de recouvrement pour compartiment à bagages selon la revendication 4, caractérisé en ce que le poussoir d'encliquetage ressort radialement extérieurement hors de la partie latérale (6) pour un actionnement manuel et comporte un ressort de rappel (20), qui le ramène dans sa position encliquetée.

6. Elément de recouvrement pour compartiment à bagages selon la revendication 5, caractérisé en ce que l'élément en forme de tige (17) comporte, au niveau de sa zone d'encliquetage, un téton d'encliquetage (19), qui fait saillie latéralement extérieurement d'un côté et que le poussoir d'encliquetage (7) a un profil de clé correspondant (22,23).

7. Elément de recouvrement pour compartiment à bagages selon l'une des revendications 1 à 3, caractérisé en ce qu'à au moins une partie latérale (6a) est associé, en tant que dispositif de blocage, un dispositif d'encliquetage (7a), qui bloque la partie latérale (6a) axialement par rapport à l'arbre de support (10a) et qui peut être verrouillé à l'aide d'un bouton d'actionnement (7a) pouvant être actionné manuellement.

8. Elément de recouvrement pour compartiment à bagages selon la revendication 7, caractérisé en ce que le dispositif d'encliquetage (7a) possède un élément d'encliquetage (7a), qui est chargé par un dispositif à ressort (26) et qui, lorsque l'élément de recouvrement (1a) du compartiment à bagages est dans la position de libération, peut être repoussé automatiquement par la force de pression du dispositif à ressort (26), dans sa position qui bloque la partie latérale (6a).

9. Elément de recouvrement pour compartiment à bagages selon la revendication 8, caractérisé en ce que l'élément d'encliquetage (7a) fait partie du bouton d'actionnement.

10. Elément de recouvrement pour compartiment à bagages selon la revendication 1, caractérisé en ce qu'il est prévu, comme dispositif de blocage, un dispositif d'encliquetage, qui agit conformément au principe du stylo à bille, pour la partie latérale (6b).
